# EUROPÄISCHE PATENTSCHRIFT

(11) **EP 2 239 128 B1**
(45) Veröffentlichungstag und Bekanntmachung des Hinweises auf die Patenterteilung: **26.07.2017**
(21) Anmeldenummer: 09013606.0
(22) Anmeldetag: 29.10.2009
(51) Int. Cl.: B62D 25/04, B62D 29/00, B62D 21/15

(54) **Fahrzeugteil mit Strukturverstärkungsteil**
Vehicle component with structural reinforcement section
Pièce de véhicule dotée d'un élément de renforcement de structure

(43) Veröffentlichungstag der Anmeldung: 13.10.2010
(73) Patentinhaber: Metalsa Automotive GmbH, 51702 Bergneustadt (DE)
(72) Erfinder: Günther, Stefan, 53783 Eitorf (DE); Maier, Dirk, 53721 Siegburg (DE); Röhner, Stephan, 44287 Dortmund (DE)
(74) Vertreter: Rebbereh, Cornelia

(56) Entgegenhaltungen:
- EP-A1- 1 026 071
- EP-A2- 1 031 467
- WO-A1-03/037668
- WO-A1-2007/057275
- DE-A1- 4 423 687
- DE-A1-102007 053 353
- DE-A1-102008 011 517
- US-A- 4 713 283

## Beschreibung

Die Erfindung betrifft ein Fahrzeugteil mit Strukturverstärkungsteil, das Strukturverstärkungsteil sowie ein Fahrzeug mit zumindest einem solchen Fahrzeug- bzw. Strukturverstärkungsteil.

Fahrzeugteile, wie die B-Säulen eines Kraftfahrzeugs, mit Strukturverstärkungsteilen sind grundsätzlich im Stand der Technik bekannt. Diese dienen einer Versteifung des Fahrzeugsteils, um bei einem Unfall den auftretenden Kräften länger und besser standzuhalten. Beispielsweise offenbart die DE 10 2005 039 925 A1 eine B-Säule zur Montage an einer Fahrzeugkarosserie mit einem nach außen weisenden Blechformteil und einem nach innen weisenden Kunststoffträgerelement zur Aufnahme der Funktionsteile eines Sicherheitsgurtsystems. Das Kunststoffträgerelement ist dabei an das Blechformteil angespritzt. Hierdurch soll eine steife und feste B-Säule zur Verfügung gestellt werden, die die einwirkenden Kräfte besser übertragen kann und im Einbauzustand zur Versteifung der Fahrzeugkarosserie beiträgt.

Zwar bietet die Kombination aus Blechformteil und Kunststoffträgerelement nach diesem Stand der Technik bereits eine im Vergleich zu einem reinen Blechformteil steifere Ausbildung einer B-Säule eines Fahrzeugs. Bei einem seitlichen Aufprall bzw. einer seitlichen Intrusion auf die B-Säule besteht jedoch die Gefahr, dass das Kunststoffträgerelement aufgrund der einwirkenden Kräfte bricht und somit hierdurch eine noch größere Verletzungsgefahr für die Fahrzeuginsassen besteht als ohne das Vorsehen eines solchen Kunststoffträgerelementes.

Aus der DE 10 2007 053 353 A1 ist eine Karosseriesäule für Fahrzeuge mit einem sich bei Anordnung an einer Fahrzeugkarosserie bezogen auf die Schwerkraftrichtung in vertikaler Richtung erstreckenden Säulenelement bekannt, bei der das Säulenelement aus einem Faserverbundkunststoff hergestellt ist, mittels eines Verstärkungselements verstärkt ist und das Verstärkungselement aus einem zu dem Faserverbundkunststoff unterschiedlichen Verstärkungsmaterial hergestellt ist.

Der vorliegenden Erfindung liegt daher die Aufgabe zugrunde, ein Fahrzeugteil mit Strukturverstärkungsteil vorzusehen, bei dem eine besonders hohe Sicherheit für die Fahrzeuginsassen unter verbessertem Kraftaufnahmevermögen sowie Steifigkeitserhöhung des Fahrzeugteils vorgesehen wird.

Die Aufgabe wird durch ein Fahrzeugteil nach dem Oberbegriff des Anspruchs 1 dadurch gelöst, dass die Fasern im Strukturverstärkungsteil in einem vorgespannten Zustand in den Kunststoff eingebettet sind oder ein Zugverband in vorgespannter Form der eingebetteten Fasern vorgesehen ist, wobei die Fasern derart ausgerichtet sind, dass bei Belastung des Fahrzeugteils durch eine auftretende Kraft einer Deformation des Profils des Fahrzeugteils, insbesondere einer Öffnungstendenz und/oder einem Einknicken von diesem, entgegengewirkt wird. Für ein Strukturverstärkungsteil nach dem Oberbegriff des Anspruchs 10 wird die Aufgabe dadurch gelöst, dass die Fasern im Strukturverstärkungsteil in einem vorgespannten Zustand in den Kunststoff eingebettet sind oder ein Zugverband in vorgespannter Form der eingebetteten Fasern vorgesehen ist, wobei die Fasern eine gezielte Ausrichtung in dem Strukturverstärkungsteil aufweisen zum Vorsehen von Steifigkeiten auch lediglich in einzelnen Richtungen. Weiterbildungen der Erfindung sind in den abhängigen Ansprüchen definiert.

Dadurch wird ein Fahrzeugteil mit Strukturverstärkungsteil geschaffen, das aufgrund der eingebetteten Fasern besonders gut einen Aufprall und die hierbei auftretenden hohen sog. Intrusionskräfte ertragen kann. Hierbei ist es durch das Vorsehen von in Kunststoff eingebetteten Fasern in dem Strukturverstärkungsteil möglich, die Eindringtiefe in das Fahrzeug im Bereich des Fahrzeugsteils bei einem Aufprall möglichst gering zu halten, da die auftretenden Kräfte durch die Fasern in die Struktur abgeleitet werden können. Hierdurch ist es ebenfalls möglich, auch bleibende Verformungen des Fahrzeugteils möglichst gering zu halten. Insbesondere wird durch die eingebetteten Fasern auch ein in sich haltbareres Element geschaffen, das bei Auftreffen einer Intrusionskraft nicht unkontrolliert zerbricht. Vielmehr können die eingeleiteten Kräfte über die Fasern gezielt aufgenommen und in die Struktur des restlichen Fahrzeugs abgeleitet werden. Das Fahrzeugteil kann somit im Vergleich zu herkömmlichen Fahrzeugteilen aus Blech hohe Kräfte aufnehmen, bevor es zu einem Profilsteifigkeitsverlust durch Zusammenfalten kommt.

Die Fasern werden hierbei eine gezielte Ausrichtung in dem Strukturverstärkungsteil aufweisen. Ferner ist es ebenfalls möglich, die Fasern in einer willkürlichen Anordnung innerhalb des Strukturverstärkungsteils vorzusehen, wobei eine Versteifung in verschiedenen Richtungen hierdurch erzeugt werden kann. Beim gezielten Ausrichten der Fasern können Steifigkeiten auch lediglich in einzelnen Richtungen vorgesehen werden, beispielsweise zur Aufnahme von lediglich Zugspannungen. Insbesondere ist auch ein Überkreuzen der Faserrichtungen möglich, beispielsweise auch das Anordnen der in unterschiedlichen Richtungen ausgerichteten Fasern in mehreren Lagen.

Der Strukturverstärkungsteil ist vorteilhaft bezüglich der späteren Einbaulage des Fahrzeugteils im Fahrzeug zu dessen Innenraum hin gerichtet, also auf der Innenseite des Fahrzeugteils, angeordnet. Dies ist üblicherweise die stoßabgewandte Seite des Fahrzeugteils, wenn eine äußere Kraft bei einem Unfall auf dieses einwirkt. Aufgrund des Anordnens auf der stoßabgewandten Seite des Fahrzeugteils kann dieses von hier aus gestärkt und somit der Stoßkraft entgegengewirkt werden. Hierdurch ist eine besonders hohe Kraft- bzw. Energieaufnahme möglich, wobei der tragende Profilquerschnitt des Fahrzeugteils über eine möglichst lange Zeit und einen langen Auftreffweg der auftreffenden Kraft erhalten bleibt. Fahrzeugteil und Strukturverstärkungsteil nehmen somit sehr lange und über einen langen Wegabschnitt hinweg Kraft und Energie des Aufpralls auf, so dass ein verbesserter Insassenschutz für die Fahrzeuginsassen ermöglicht wird.

Insbesondere bei in Längsrichtung des Strukturverstärkungsteils und somit auch des Fahrzeugteils ausgerichteten Fasern können diese im Belastungsfall insbesondere Zugspannungen aufnehmen, die hierdurch einem Zusammendrücken des Fahrzeugteils sowie einem Einknicken von dessen Profilquerschnitt entgegenwirken. Die Fasern können dabei lediglich partiell in dem Strukturverstärkungsteil angeordnet sein, insbesondere im seitlichen Bereich sowie in dem vom Fahrzeugteil entfernten und in der Einbaulage in Richtung des Fahrzeuginnenraums gerichteten Bereich.

Als Fasern können metallische, jedoch auch nicht metallische Fasern verwendet werden. Grundsätzlich ist auch eine Kombination aus metallischen und nicht metallischen Fasern in dem Strukturverstärkungsteil möglich, wobei sich dies insbesondere dann anbietet, wenn über die Erstreckung des Strukturverstärkungsteils hinweg unterschiedliche Belastungen bei einem Unfall des Fahrzeugs auftreten und aufgenommen werden sollen. Insbesondere in Kunststoff eingebettete Stahlfasern werden hierbei zu einer größeren Steifigkeit führen als eingebettete nicht metallische Fasern, die eher eine höhere Elastizität erzeugen, wobei eine Rückverformung hierdurch unterstützt werden kann, so dass bleibende Verformungen nach einem Unfall geringer ausfallen.

Die Fasern können, anders als in der Erfindung, in nicht vorgespannter Form in den Kunststoff eingebettet sein oder werden. Als besonders vorteilhaft, wie in der Erfindung, erweist es sich jedoch, einen Zugverband in vorgespannter Form der eingebetteten Fasern vorzusehen, da hierdurch eine höhere Aufprall- bzw. Intrusionskraft ertragen werden kann, so dass das Fahrzeugteil eine noch bessere Verstärkung und Aussteifung erfährt. Im Vergleich zur Ausführungsform eines Strukturverstärkungsteils mit nicht vorgespannten eingebetteten Fasern kann eine geringere Wandstärke des Fahrzeugteils bei vorgespannten eingebetteten Fasern vorgesehen werden, bei gleicher möglicher Kraftaufnahme. Somit sind eine Materialeinsparung und entsprechend auch eine deutliche Gewichtsersparnis möglich bei Vorsehen von vorgespannten Fasern im Vergleich zu einer Ausführungsform mit nicht vorgespannten Fasern.

Die eingebetteten Fasern können ferner so ausgerichtet werden, dass bei Belastung des Profils des Fahrzeugteils durch eine auftreffende Kraft einer Deformation des Profils, insbesondere einer Öffnungstendenz von diesem entgegengewirkt wird. Hierbei können die Fasern quer zur Längserstreckung des Strukturverstärkungsteils angeordnet werden. Wie bereits erwähnt, können verschiedene Anordnungswinkel der eingebetteten Fasern zueinander gezielt vorgesehen werden, insbesondere die Fasern in unterschiedlichen Lagen mit unterschiedlicher Ausrichtung angeordnet werden.

Eine weitere Verstärkung des Strukturverstärkungsteils und somit auch der Kombination aus Fahrzeugteil und Strukturverstärkungsteil ist erfindungsgemäß, dass das Strukturverstärkungsteil mit zumindest einem aussteifenden Element, insbesondere zumindest einer Rippe, versehen ist. Als besonders vorteilhaft erweist es sich, das zumindest eine aussteifende Element in Richtung des Fahrzeugteils und/oder einer einwirkenden Intrusionskraft anzuordnen. Es wird daher an der Seite des Strukturverstärkungsteils angeordnet, die zu dem Fahrzeugteil gerichtet und mit diesem verbunden wird. Derartige aussteifende Elemente bzw. Rippen sind somit bezogen auf das Fahrzeug selbst in Richtung von dessen Außenseite orientiert angeordnet, so dass eine auf das Fahrzeugteil einwirkende Kraft zwar zu einer Verformung von diesem führt, jedoch die verformten Bereiche sich an den aussteifenden Elementen des Strukturverstärkungsteils formschlüssig abstützen können. Einer weiteren Verformung wird damit entgegengewirkt.

Derartige aussteifende Elemente können lediglich partiell in den Bereichen des Strukturverstärkungsteils vorgesehen werden, in denen eine zusätzliche Abstützung der Fahrzeugteilstruktur erforderlich erscheint. Somit kann gezielt auf das Vertormungsverhalten nicht nur des Strukturverstärkungsteils, sondern auch des Fahrzeugteils bzw. der Kombination aus Fahrzeugteil und Strukturverstärkungsteil eingewirkt werden, wobei nur in einzelnen Bereichen ein Einbeulen bzw. Einknicken der tragenden Struktur des Fahrzeugteils bzw. von dessen Profilquerschnitt zugelassen oder verhindert wird.

Als weiter vorteilhaft erweist es sich, wenn das Strukturverstärkungsteil zumindest einen angeformten Dichtungs- und/oder Klebeflansch und/oder Klebeflächen im Bereich des oder an dem zumindest einen aussteifenden Element aufweist. Gerade im Bereich der aussteifenden Elemente ist somit dann ein formschlüssiger und stabiler Halt des Strukturverstärkungsteils an dem Fahrzeugteil möglich, so dass die abstützende Wirkung der aussteifenden Elemente für den Fahrzeugteil sichergestellt werden kann. Das Vorsehen eines angeformten Dichtungsflansches erweist sich zum Verhindern eines Eindringens von Feuchtigkeit zwischen Strukturverstärkungsteil und Fahrzeugteil als vorteilhaft, um Korrosion an dem insbesondere aus Metall bestehenden Fahrzeugteil sicher zu vermeiden. Gerade aufgrund der unregelmäßigen Formgebung des Strukturverstärkungsteils, insbesondere auch unter Vorsehen von Hinterschneidungen, die an die Formgebung des Fahrzeugteils vorteilhaft angepasst sind, besteht bei eindringender Feuchtigkeit ohne das Vorsehen von Dichtungsflanschen ansonsten durchaus die Gefahr, dass sich Kondensat in den Hinterschneidungen des Fahrzeugteils sammelt und dort zu Korrosion führt.

Ferner weist das Strukturverstärkungsteil vorteilhaft zumindest eine Aufnahmeeinrichtung und/oder einen Flansch zum Verbinden mit zumindest einem weiteren Bauteil auf, insbesondere eine angeformte Aufnahmeeinrichtung und/oder einen angeformten Flansch. Es kann hierüber eine Verbindung z.B. zu einer Gurtumlenkung, einem Halter für die Schließöse einer Fahrzeugtür, einer Gurthöhenverstellung etc. geschaffen werden. Da das Strukturverstärkungsteil üblicherweise in Bezug auf das Fahrzeug auf dessen Innenseite angeordnet ist, erweist sich das Vorsehen der Aufnahmeeinrichtung an diesem Strukturverstärkungsteil als vorteilhafter als an dem Fahrzeugteil selbst, das bezüglich des Fahrzeugs in Richtung von dessen Außenseite gerichtet angeordnet wird. Die Nähe zu dem Innenraum ist bei dem Strukturverstärkungsteil größer. Ferner weist dieses aufgrund der eingebetteten Fasern auch eine besonders hohe Stabilität auf, so dass ein Verformen des Strukturverstärkungsteils aufgrund der an diesem befestigten Einrichtungen und Elemente im Wesentlichen nicht zu befürchten steht.

Nicht nur die Position der aussteifenden Elemente und der Fasern in dem Strukturverstärkungsteil, sondern auch die Wandstärke des Strukturverstärkungsteils kann belastungsabhängig variiert werden. Es ist somit möglich, unterschiedliche Wandstärken je nachdem, in welchem Bereich besonders hohe Kräfte bei einem Unfall auf das einwirkende Strukturverstärkungsteil zu erwarten sind, vorzusehen. Auch die Anzahl von eingebetteten Fasern bzw. Lagen von eingebetteten Fasern kann hier belastungsabhängig über die Erstreckung des Strukturverstärkungsteils variiert werden.

Das Strukturverstärkungsteil kann an dem Fahrzeugteil lösbar befestigt sein. Ebenfalls ist es möglich, das Strukturverstärkungsteil unlösbar an dem Fahrzeugteil zu befestigen. Insbesondere können Strukturverstärkungsteil und Fahrzeugteil gefügt sein, insbesondere durch eine formschlüssige und/oder kraftschlüssige Verbindung, eine Haftverbindung, Kleben, Nieten, Durchsetzfügen, etc. verbunden sein oder werden.

Für die Verbindung von Fahrzeugteil und Strukturverstärkungsteil kann insbesondere ein Karosseriestrukturkleber verwendet werden. Das Fahrzeugteil kann als kalt- oder warmumgeformte Blechschale ausgebildet sein, wobei vorteilhaft Klebeflächen an dem Strukturverstärkungsteil als äußere Kontur der aussteifenden Elemente ausgebildet, mit Kleber benetzt und entsprechend mit dem Fahrzeugteil verklebt sind. Anstelle eines Karosseriestrukturklebers kann auch eine andere Art eines Klebers verwendet werden, der eine feste Verbindung eines insbesondere Metallteils in Form des Fahrzeugteils und eines Kunststoffteils in Form des Strukturverstärkungsteils sicherstellt. Eine Kombination mit einem Nieten oder einer anderen Fügeart, wie dem Durchsetzfügen, führt zu einer noch festeren Verbindung von Fahrzeugteil und Strukturverstärkungsteil.

Durch das Vorsehen der Strukturverstärkungsteile, die mit den jeweiligen Fahrzeugteilen verbunden werden, ist es ferner möglich, an den Strukturverstärkungsteilen bereits weitere Funktionsbauteile zu montieren, bevor die Strukturverstärkungsteile mit den Fahrzeugteilen verbunden werden. Hierdurch ist eine besonders einfache und gute Montage einerseits und andererseits ein vielfältiger modularer Aufbau der Kombination aus Fahrzeugteil und Strukturverstärkungsteil möglich, so dass anwendungsspezifisch zahlreiche weitere Funktionen hier im Bereich des Strukturverstärkungsteils mit integriert werden können.

Durch das Vorsehen des Strukturverstärkungsteils mit eingebetteten Fasern ist ferner eine besonders gute Akustikabstimmung des jeweiligen Fahrzeugteils in Bezug auf den Gesamtkarosserieverbund möglich, da das Strukturverstärkungsteil in sich so stabil ausgebildet ist, dass bei dessen Anbringen an dem Fahrzeugteil keine schwingenden Elemente aufgebaut werden, die ansonsten zu einem Klappern oder einer anderweitigen Geräuschentwicklung führen könnten. Vielmehr kann eine stabile Einheit aus Strukturverstärkungsteil und Fahrzeugteil vorliegend geschaffen werden.

In Bezug auf ein Kraftfahrzeug, insbesondere einen Pkw oder Lkw, bei dem ein entsprechend ausgerüstetes Fahrzeugteil bzw. Strukturverstärkungsteil vorgesehen ist, ist sogar nach Ablauf der Fahrzeuglebensdauer eine sehr gute Trennung von Fahrzeugteil und Strukturverstärkungsteil möglich, was heutzutage wichtig ist, um eine Abfalltrennung insbesondere nach metallischen und nicht metallischen Werkstoffen, die einer erneuten Nutzung zugeführt werden, vornehmen zu können.

Fahrzeugteile, die besonders gut mit einem solchen Strukturverstärkungsteil versehen werden können und die insbesondere bei einem Seitenaufprall auf ein Fahrzeug hier besonderen Belastungen ausgesetzt sind, sind bspw. A-Säulen, B-Säulen, Seitenaufprallschutzeinrichtungen und Überrollbügel eines Kraftfahrzeugs. Selbstverständlich kann ein solches Strukturverstärkungsteil auch in anderen Fahrzeugteilen angeordnet werden, wobei es seine aussteifende Wirkung insbesondere im Zusammenhang mit Fahrzeugteilen, die einer dynamischen Belastung ausgesetzt sind oder werden, besonders gut entfaltet.

Als Kunststoffmaterial, in das die Fasern eingebettet werden, insbesondere vorgespannt eingebettet werden, kommt z.B. ein Kunststoffharzmaterial in Betracht, das einerseits vom Gewicht her leicht und andererseits ausreichend steif ist, so dass eine beliebige Formgebung des Strukturverstärkungsteils, entsprechend den Gegebenheiten des Fahrzeugbauteils problemlos vorgesehen werden kann. Verwendet werden kann ferner insbesondere Polyamid 6 (PA6), glasfaserverstärkt bzw. Kunststoffe, die thermisch resistent sind, um die bei der kataphoretischen Tauchlackierung (KTL) auftretenden Prozesstemperaturen von über 200°C über 15 min ertragen zu können.

Zur näheren Erläuterung der Erfindung wird im Folgenden ein Ausführungsbeispiel von dieser näher anhand der Zeichnungen beschrieben. Diese zeigen in:
- Figur 1: eine perspektivische Ansicht eines erfindungsgemäßen Fahrzeugteils mit erfindungsgemäßem Strukturverstärkungsteil sowie einer Aufnahmeeinrichtung für Anbauteile, in der Sicht auf die Außenseite des Fahrzeugteils,
- Figur 2: eine um 180° gedrehte perspektivische Ansicht des Fahrzeugteils, des Strukturteils sowie der Aufnahmeeinrichtung gemäß Figur 1, in der Sicht auf die Innenseite des Fahrzeugteils und des Strukturverstärkungsteils,
- Figur 3a und b: perspektivische Ansichten des Strukturverstärkungsteils mit Aufnahmeeinrichtung gemäß Figur 1, in der Sicht von außen und von innen,
- Figur 4: eine Draufsicht auf die Außenseite des Strukturverstärkungsteils mit Aufnahmeeinrichtung mit prinzipieller Darstellung von Spannungsverteilungen, und
- Figur 5: eine Seitenansicht des Fahrzeugteils, mit gefügtem Strukturverstärkungsteil, enthaltend ebenfalls Pfeile zur Darstellung der wirkenden Spannungen.

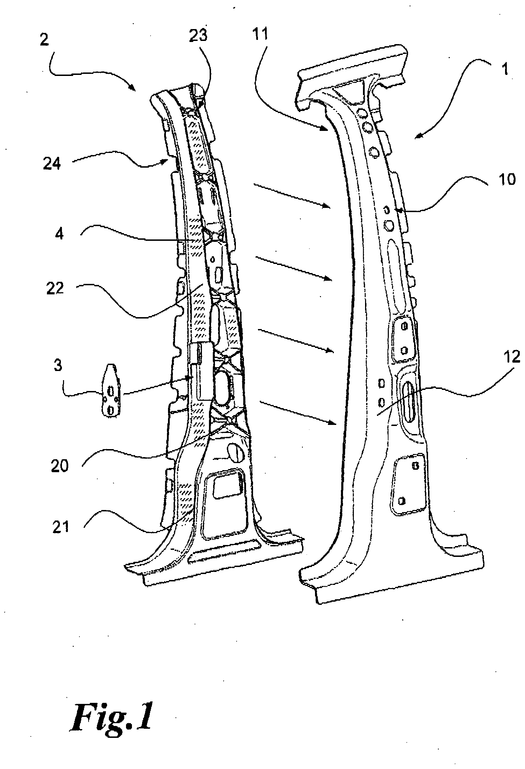

Figur 1 zeigt eine perspektivische Ansicht eines Fahrzeugteils 1 mit einem Strukturverstärkungsteil 2. Das Fahrzeugteil 1 ist schalenförmig ausgebildet in Form einer B-Säule eines Fahrzeugs bzw. Pkws. Es besteht insbesondere aus einem Metall und weist eine in der Einbaulage in einem Fahrzeug nach außen weisende Außenseite 10 und eine nach innen in den Fahrgastraum weisende Innenseite 11 auf.

Das Strukturverstärkungsteil 2 ist ebenfalls strukturiert mit einer unregelmäßigen, jedoch zu der Formgebung des Fahrzeugteils passenden Formgebung ausgebildet. Auch das Strukturverstärkungsteil weist eine Außenseite 23 auf, die jedoch zu dem Fahrzeugteil 1 gerichtet ist, ebenso wie eine Innenseite 24, die in der Einbaulage zu einem Fahrgastraum gerichtet ist.

Das Strukturverstärkungsteil besteht aus einem Kunststoffmaterial mit darin eingebetteten Fasern 4. Dies können Endlosfasern oder auch kurzformatige Fasern, also Faserabschnitte, sein. Die eingebetteten Fasern erstrecken sich entweder in Längsrichtung des Strukturverstärkungsteils oder in einem Winkel hierzu. Selbstverständlich ist es möglich, die in dem Strukturverstärkungsteil angeordneten Fasern auch in unterschiedlichen Richtungen in diesem anzuordnen, um Verformungskräfte, die auf das Strukturverstärkungsteil einwirken, in verschiedenen Richtungen abzufangen und abzuleiten, also Steifigkeiten gegen Verformungen in unterschiedlichen Richtungen aufzubauen.

Neben dem Vorsehen von eingebetteten Fasern weist das Strukturverstärkungsteil aussteifende Elemente in Form von Rippen 20 auf, die jeweils kreuzförmig in einem Winkel zur Längserstreckung des Strukturverstärkungsteils entlang von diesem jeweils beabstandet zueinander angeordnet sind. Eine Konzentration von Rippen in diesen beabstandeten Bereichen führt zu einer lokal besonders hohen Steifigkeit und damit insbesondere Beulsteifigkeit in diesen Bereichen. Die Rippen können ferner eine Romben- oder vieleckige Form aufweisen, vorteilhaft in Abhängigkeit von dem jeweiligen Belastungsfall variierend.

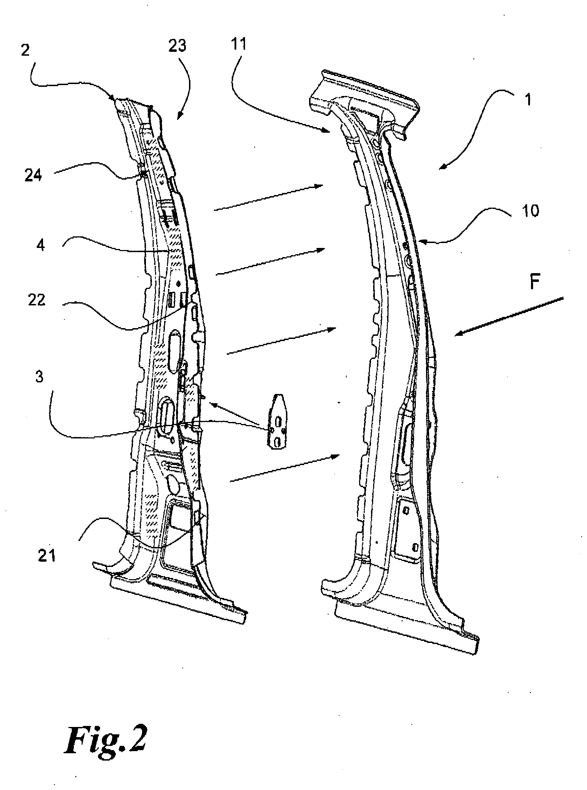

Gerade dann, wenn die Fasern in Längsrichtung des Strukturverstärkungsteils angeordnet sind, um Zugspannungen bei Einwirken von Kräften auf das Fahrzeugteil besonders gut aufnehmen zu können, erweist sich das Anordnen der aussteifenden Elemente in Form von Rippen in Winkeln hierzu als besonders vorteilhaft, um in Richtung einer einwirkenden Kraft F, die in Figur 2 durch einen Pfeil angedeutet ist, eine hohe Steifigkeit aufzubauen. In den Bereichen, in denen die Rippen angeordnet sind, kann hierdurch eine zusätzliche quer zu den Fasern gerichtete Steifigkeit erzielt werden.

Die schräg zur Längserstreckung des Strukturverstärkungsteils angeordneten Rippen 20 sind in dem in Figur 1 gezeigten Ausführungsbeispiel durch in Längsrichtung des Strukturverstärkungsteils angeordnete Längsrippen 21 endseitig verbunden. Diese Längsrippen erstrecken sich über die gesamte Länge des Strukturverstärkungsteils hinweg. Sie weisen außenseitig jeweils einen Klebeflansch 22 auf. Über diesen kann das Strukturverstärkungsteil 2 mit dem Fahrzeugteil 1 auf einfache Weise verbunden werden. Als Kleber eignet sich insbesondere ein Strukturkleber, bspw. Betamate. Ferner kann zusätzlich eine Verbindung über Nieten oder Durchsetzfügen oder ein anderes Fügeverfahren vorgesehen werden. Entsprechende Durchgangsöffnungen können in dem als Kaltumformteil bzw. als Warmumformteil ausgebildeten Fahrzeugteil ebenso wie in dem Strukturverstärkungsteil vorgesehen werden. Das Fahrzeugteil in Form eines hochfesten Blechbauteils weist den beiden Klebeflanschen 22 entsprechende Seitenwandungen 12 auf. Somit ist hierüber ein formschlüssiges Verbinden von Fahrzeugteil und Strukturverstärkungsteil möglich.

Die Wandstärke insbesondere der Längsrippen 21, jedoch auch der Rippen 20, kann belastungsabhängig variiert werden. Diese Rippen können somit unterschiedliche Wandstärken aufweisen, um hierüber eine besonders optimierte Aufnahme von Kräften vorzusehen. In dem Bereich, in dem eine breitere Fläche zum Abstützen des Fahrzeugteils sinnvoll ist, kann die Wandstärke größer ausgebildet sein, hingegen in den Bereichen, in denen nur eine geringe Kraftaufnahme zu erwarten ist, kann sie geringer ausgebildet sein.

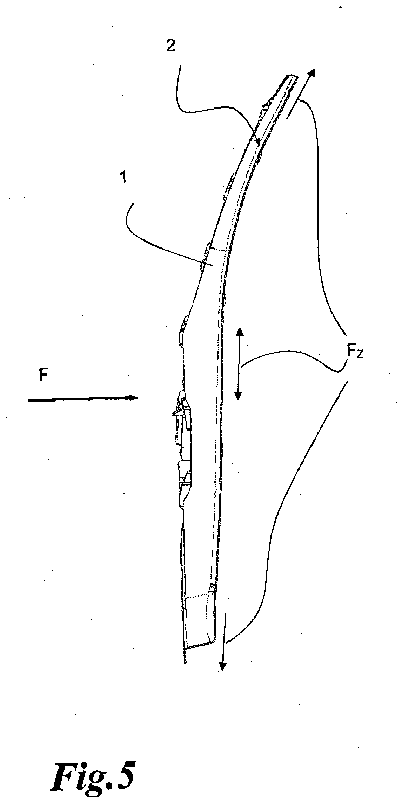

Die in das Strukturverstärkungsteil eingebetteten Fasern 4 können bspw. Stahlfasern oder auch andere metallische oder nichtmetallische Fasern sein. Insbesondere ist es möglich, diese vorzuspannen in Längsrichtung des Strukturverstärkungsteils, um eine besonders gute Aufnahme von bei einem Aufprall entstehenden Zugspannungen zu ermöglichen. Dies ist in Figur 5 angedeutet, wobei klar erkennbar ist, dass eine Krafteinwirkung (Pfeil F) auf der Außenseite 10 des Fahrzeugteils 1 zu Zugspannungen (Pfeile F_{Z}) in dem Strukturverstärkungsteil 2 und deren Aufnahme durch die Fasern 4 führt.

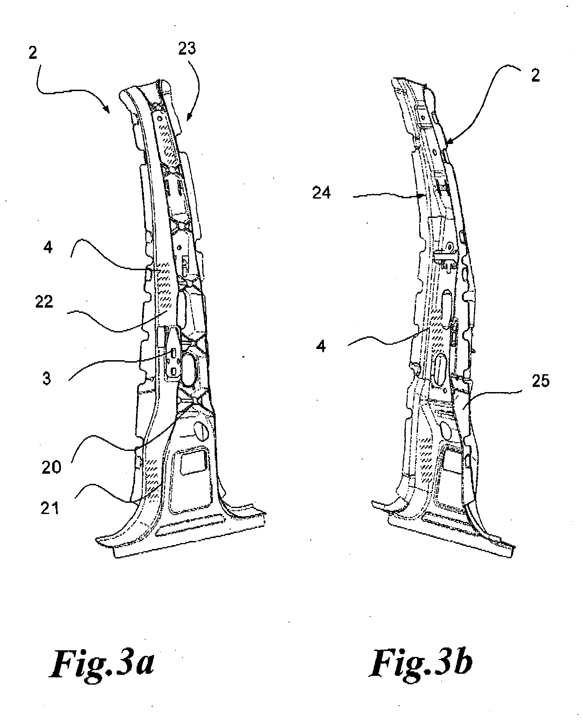

Figur 1 zeigt zusätzlich zu dem Fahrzeugteil und dem Strukturverstärkungsteil eine Aufnahmeeinrichtung 3, die zum Verbinden mit einem weiteren Bauteil dient. Bspw. kann diese Aufnahmeeinrichtung als Halter für eine Schließöse ausgebildet sein, als Aufnahme für einen Gurtumlenker, als Aufnahme für eine Gurthöhenverstellung etc.. Diese Aufnahmeeinrichtung 3 wird mit dem Strukturverstärkungsteil 2 verbunden bzw. an diesem befestigt oder angeformt. Der zusammengefügte Zustand ist besser der Figur 3a zu entnehmen. Diese Aufnahmeeinrichtung ist, wie den Figuren 1 - 4 entnommen werden kann, in einem besonders verstärkten Bereich des Strukturverstärkungsteils angeordnet, nämlich im Bereich mehrerer Rippen 20, so dass Verformungen durch an dem weiteren Bauteil bzw. der Aufnahmeeinrichtung 3 angreifende Kräfte möglichst vermieden werden können.

Die Figur 2 zeigt eine jeweilige Ansicht auf die Innenseiten 11, 24 des Fahrzeugteils 1 und des Strukturverstärkungsteils 2, wobei deutlich erkennbar ist, dass beide Teile 1, 2 schalenartig ausgebildet sind. Um zumindest teilweise formschlüssig aufeinander zu passen, sind die Rippen bzw. weitere Elemente von Strukturverstärkungsteil und Fahrzeugteil einander etwa entsprechend ausgebildet. Bei Krafteinwirkung können insbesondere die Rippen 20, 21 dann das sich verformende Fahrzeugteil abstützen.

Das mit der Aufnahmeeinrichtung 3 zusammengefügte Strukturverstärkungsteil 2 ist in Figur 3a und 3b einmal in der Ansicht auf die Außenseite 23 (Figur 3a) und einmal in der Ansicht auf die Innenseite 24 (Figur 3b) gezeigt. Die stark strukturierte und komplexe Formgebung des Strukturverstärkungsteils ist hier deutlich erkennbar. Außenseitig weist das Strukturverstärkungsteil 2 Flanschabschnitte 25 auf, die zum Verbinden mit dem Fahrzeugteil 1, jedoch auch mit anderen benachbarten Fahrzeugteilen dienen.

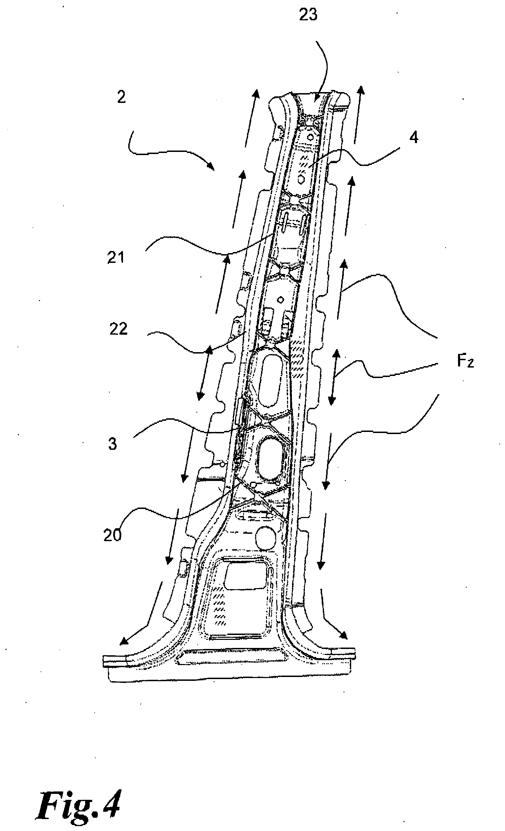

Figur 4 zeigt nun den Spannungsverlauf des belasteten Strukturverstärkungsteils 2, wobei deutlich erkennbar ist, dass eine auf der Außenseite des Fahrzeugteils auftreffende Kraft in dem Strukturverstärkungsteil zu Zugspannungen (Pfeile F_{Z}) führt, die sich entlang der Längserstreckung des Strukturverstärkungsteils 2 verteilen. Dies geht auch aus Figur 5 hervor, wobei hier ein Zusammenbau von Fahrzeugteil und Strukturverstärkungsteil in der Seitenansicht gezeigt ist. Deutlich erkennbar ist auch hier, dass die Zugspannungen (Pfeile F_{Z}) besonders in Richtung des Innenraums eines Fahrzeugs, also auf dessen Innenseite 24, in dem Strukturverstärkungsteil aufgenommen und abgeleitet werden. Die Fasern 4 sind entsprechend angeordnet, ggf. auch in Lagen mit unterschiedlicher Orientierung der Fasern, um die Zugspannungen aufzunehmen und einem Einknicken und Beulen des Fahrzeugteils entgegenzuwirken.

Neben den im Vorstehenden genannten und in den Zeichnungen gezeigten Ausführungsvarianten von Fahrzeugteilen und Strukturverstärkungsteilen können noch zahlreiche weitere vorgesehen werden, bei denen jeweils das Strukturverstärkungsteil in Kunststoff eingebettete Fasern zur Aufnahme von Zug- und/oder Druckkräften oder Zug- und/oder Druckspannungen umfasst, um insbesondere auftretende Aufprallkräfte bei einem Unfall ableiten und somit so weit wie möglich abfangen und aufnehmen zu können. Neben dem Vorsehen eines solchen Strukturverstärkungsteils z.B. an einer A- und/oder B-Säule eines Kraftfahrzeugs, insbesondere PKWs oder LKWs, kann ein solches auch vorteilhaft bei einer Seitenaufprallschutzeinrichtung und auch bei Überrollbügeln eines Kraftfahrzeugs vorgesehen werden.

### Bezugszeichenliste

- 1: Fahrzeugteil
- 2: Strukturverstärkungsteil
- 3: Aufnahmeeinrichtung
- 4: Fasern
- 10: Außenseite
- 11: Innenseite
- 12: Seitenwandung
- 20: Rippe
- 21: Längsrippe
- 22: Klebeflansch
- 23: Außenseite
- 24: Innenseite
- F: Intrusionskraft
- F_{Z}: Zuspannung

## Patentansprüche

1. Fahrzeugteil (1) mit Strukturverstärkungsteil (2), wobei das Fahrzeugteil (1) eine Außenseite (10) und eine Innenseite (11) aufweist, die die stoßabgewandte Seite des Fahrzeugteils (1) in dessen Einbaulage in einem Fahrzeug ist, wobei das Strukturverstärkungsteil (2) eine Außenseite (23) und eine Innenseite (24) aufweist und mit seiner Außenseite (23) auf der Innenseite (11) des Fahrzeugteils (1) angeordnet und mit diesem verbunden ist und wobei das Strukturverstärkungsteil (2) in Kunststoff eingebettete Fasern (4) zur Aufnahme von Zug- und/oder Druckkräften oder Zug- (F_{Z}) und/oder Druckspannungen umfasst, wobei das Strukturverstärkungsteil (2) mit zumindest einem aussteifenden Element, insbesondere zumindest einer Rippe (20, 21), versehen ist, wobei das zumindest eine aussteifende Element (20, 21) in Richtung des Fahrzeugteils (1) an der zu dem Fahrzeugteil (1) gerichteten und mit diesem verbundenen Seite des Strukturverstärkungsteils (2) und/oder in Richtung einer einwirkenden Intrusionskraft gerichtet angeordnet ist, wobei eine auf das Fahrzeugteil (1) einwirkende Kraft zu einer Verformung von diesem führt und sich die verformten Bereiche an den aussteifenden Elementen (20,21) des Strukturverstärkungsteils (2) formschlüssig abstützen,
**dadurch gekennzeichnet, dass**
- die Fasern (4) im Strukturverstärkungsteil (2) in einem vorgespannten Zustand in den Kunststoff eingebettet sind oder ein Zugverband in vorgespannter Form der eingebetteten Fasern vorgesehen ist, wobei
- die Fasern (4) derart ausgerichtet sind, dass bei Belastung des Fahrzeugteils (1) durch die auftretende Kraft einer Deformation des Profils des Fahrzeugteils (1), insbesondere einer Öffnungstendenz und/oder einem Einknicken von diesem, entgegengewirkt wird.

2. Fahrzeugteil (1) nach Anspruch 1,
**dadurch gekennzeichnet, dass**
metallische Fasern (4) vorgesehen sind.

3. Fahrzeugteil (1) nach Anspruch 1,
**dadurch gekennzeichnet, dass**
nicht metallische Fasern (4) vorgesehen sind.

4. Fahrzeugteil (1) nach Anspruch 1,
**dadurch gekennzeichnet, dass**
metallische und nicht metallische Fasern (4) vorgesehen sind.

5. Fahrzeugteil (1) nach einem der vorstehenden Ansprüche,
**dadurch gekennzeichnet, dass**
das Strukturverstärkungsteil (2) an dem Fahrzeugteil (1) lösbar befestigt ist.

6. Fahrzeugteil (1) nach einem der Ansprüche 1 bis 3,
**dadurch gekennzeichnet, dass**
das Strukturverstärkungsteil (2) an dem Fahrzeugteil (1) unlösbar befestigt ist.

7. Fahrzeugteil (1) nach Anspruch 5 oder 6,
**dadurch gekennzeichnet, dass**
das Strukturverstärkungsteil (2) und das Fahrzeugteil (1) gefügt sind, insbesondere durch eine formschlüssige und/oder kraftschlüssige Verbindung, eine Haftverbindung, Kleben, Nieten, Durchsetzfügen verbindbar oder verbunden sind.

8. Fahrzeugteil nach einem der vorstehenden Ansprüche,
**dadurch gekennzeichnet, dass**
das Fahrzeugteil (1) aus einem Metall besteht.

9. Fahrzeugteil (1) nach einem der vorstehenden Ansprüchen,
**dadurch gekennzeichnet, dass**
das Fahrzeugteil (1) ein während des Betriebs eines mit diesem versehenen Fahrzeugs einer dynamischen Belastung ausgesetzter oder aussetzbarer Fahrzeugteil ist, insbesondere eine B-Säule, eine A-Säule, eine Seitenaufprallschutzeinrichtung oder ein Überrollbügel eines Kraftfahrzeugs.

10. Strukturverstärkungsteil (2) für einen Fahrzeugteil (1) zum Versteifen von und Verbinden mit diesem, wobei das Strukturverstärkungsteil (2) eine Aussenseite (23) und eine Innenseite (24) aufweist und Fasern (4) im Strukturverstärkungsteil (2) in Kunststoff eingebettet angeordnet sind, wobei das Strukturverstärkungsteil (2) mit zumindest einem aussteifenden Element, insbesondere zumindest einer Rippe (20, 21), versehen ist, wobei das zumindest eine aussteifende Element (20, 21) auf der Außenseite (23) des Strukturverstärkungsteils (2), die mit dem Fahrzeugteil (1) verbunden wird, angeordnet ist,
**dadurch gekennzeichnet, dass**
- die Fasern (4) im Strukturverstärkungsteil (2) in einem vorgespannten Zustand in den Kunststoff eingebettet sind oder ein Zugverband in vorgespannter Form der eingebetteten Fasern vorgesehen ist, wobei
- die Fasern (4) eine gezielte Ausrichtung in dem Strukturverstärkungsteil (2) aufweisen zum Vorsehen von Steifigkeiten auch lediglich in einzelnen Richtungen.

11. Strukturverstärkungsteil (2) nach Anspruch 10,
**dadurch gekennzeichnet, dass**
das Strukturverstärkungsteil (2) zumindest eine Aufnahmeeinrichtung (3) und/oder einen Flansch zum Verbinden mit zumindest einem weiteren Bauteil aufweist, insbesondere eine angeformte Aufnahmeeinrichtung und/oder einen angeformten Flansch.

12. Strukturverstärkungsteil (2) nach Anspruch 10 oder 11,
**dadurch gekennzeichnet, dass**
das Strukturverstärkungsteil (2) zumindest einen angeformten Dichtungs- und/oder Klebeflansch (22) und/oder Klebeflächen im Bereich eines oder an zumindest einem aussteifenden Element (20, 21) aufweist.

13. Kraftfahrzeug, insbesondere PKW oder LKW, mit zumindest einem Fahrzeugteil (1) nach einem der Ansprüche 1 bis 9 und/oder einem Strukturverstärkungsteil (2) nach einem der Ansprüche 10 bis 12.

## Claims

1. Vehicle component (1) having a structural reinforcement part (2), wherein the vehicle component (1) has an outer side (10) and an inner side (11), which is the side of the vehicle component (1) that, in its fitted position in a vehicle, is remote from an impact, wherein the structural reinforcement part (2) has an outer side (23) and an inner side (24) and is arranged with its outer side (23) on the inner side (11) of the vehicle component (1) and is connected thereto, and wherein the structural reinforcement part (2) comprises fibres (4) embedded in plastics material for absorbing tensile and/or compressive forces or tensile (F_{Z}) and/or compressive stresses, wherein the structural reinforcement part (2) is provided with at least one stiffening element, in particular at least one fin (20, 21), wherein the at least one stiffening element (20, 21) is arranged facing the vehicle component (1) on the side of the structural reinforcement part (2) that faces and is connected to the vehicle component (1) and/or facing an acting intrusion force, wherein a force acting on the vehicle component (1) leads to deformation thereof and the deformed regions are supported in a form-fitting manner against the stiffening elements (20, 21) of the structural reinforcement part (2), **characterised in that**
- the fibres (4) in the structural reinforcement part (2) are embedded in the plastics material in a pre-stressed state or a tensile association in pre-stressed form of the embedded fibres is provided, wherein
- the fibres (4) are so oriented that, when the vehicle component (1) is subjected to the force that occurs, deformation of the profile of the vehicle component (1), in particular a tendency thereof to open and/or buckling thereof, is counteracted.

2. Vehicle component (1) according to claim 1,
**characterised in that**
metallic fibres (4) are provided.

3. Vehicle component (1) according to claim 1,
**characterised in that**
non-metallic fibres (4) are provided.

4. Vehicle component (1) according to claim 1,
**characterised in that**
metallic and non-metallic fibres (4) are provided.

5. Vehicle component (1) according to any one of the preceding claims, **characterised in that**
the structural reinforcement part (2) is fixed to the vehicle component (1) in a detachable manner.

6. Vehicle component (1) according to any one of claims 1 to 3,
**characterised in that**
the structural reinforcement part (2) is fixed to the vehicle component (1) in a non-detachable manner.

7. Vehicle component (1) according to claim 5 or 6,
**characterised in that**
the structural reinforcement part (2) and the vehicle component (1) are joined, in particular are capable of being connected or are connected by an interlocking and/or force-based connection, an adhesive connection, adhesive bonding, riveting, clinching.

8. Vehicle component according to any one of the preceding claims, **characterised in that**
the vehicle component (1) is made of a metal.

9. Vehicle component (1) according to any one of the preceding claims, **characterised in that**
the vehicle component (1) is a vehicle component that is subjected or may be subjected to a dynamic load during operation of a vehicle provided therewith, in particular a B-pillar, an A-pillar, a side impact protection device or an anti-roll bar of a motor vehicle.

10. Structural reinforcement part (2) for a vehicle component (1) for stiffening thereof and connection thereto, wherein the structural reinforcement part (2) has an outer side (23) and an inner side (24), and fibres (4) are arranged embedded in plastics material in the structural reinforcement part (2), wherein the structural reinforcement part (2) is provided with at least one stiffening element, in particular at least one fin (20, 21), wherein the at least one stiffening element (20, 21) is arranged on the outer side (23) of the structural reinforcement part (2), which is connected to the vehicle component (1),
**characterised in that**
- the fibres (4) in the structural reinforcement part (2) are embedded in the plastics material in a pre-stressed state or a tensile association in pre-stressed form of the embedded fibres is provided, wherein
- the fibres (4) exhibit a specific orientation in the structural reinforcement part (2) in order also to provide stiffness in only some directions.

11. Structural reinforcement part (2) according to claim 10,
**characterised in that**
the structural reinforcement part (2) has at least one receiving device (3) and/or a flange for connection to at least one further component, in particular an integrally moulded receiving device and/or an integrally moulded flange.

12. Structural reinforcement part (2) according to claim 10 or 11,
**characterised in that**
the structural reinforcement part (2) has at least one integrally moulded sealing and/or bonding flange (22) and/or bonding surfaces in the region of or on at least one stiffening element (20, 21).

13. Motor vehicle, in particular passenger car or lorry, having at least one vehicle component (1) according to any one of claims 1 to 9 and/or a structural reinforcement part (2) according to any one of claims 10 to 12.

## Revendications

1. Pièce de véhicule (1) comprenant une pièce de renforcement de structure (2), dans laquelle la pièce de véhicule (1) présente une face extérieure (10) et une face intérieure (11), qui constitue la face opposée au choc de la pièce de véhicule (1) dans sa position de montage dans un véhicule, dans laquelle la pièce de renforcement de structure (2) présente une face extérieure (23) et une face intérieure (24) et est disposée, par sa face extérieure (23), sur la face intérieure (11) de la pièce de véhicule (1) et est reliée à cette dernière et dans laquelle la pièce de renforcement de structure (2) comprend des fibres (4) incorporées dans du plastique servant à absorber des forces de traction et/ou de pression ou des tensions de traction (Fz) et/ou de pression, dans laquelle la pièce de renforcement de structure (2) est pourvue, d'au moins un élément de rigidification, en particulier au moins d'une nervure (20, 21), dans laquelle l'au moins un élément (20, 21) de rigidification est disposé en direction de la pièce de véhicule (1) au niveau de la face, dirigée vers la partie de véhicule (1) et reliée à cette dernière, de la partie de renforcement de structure (2) et/ou en étant dirigé en direction d'une force d'instruction exerçant une action, dans laquelle une force exerçant une action sur la pièce de véhicule (1) conduit à une déformation de cette dernière et les zones déformées prennent appui au niveau des éléments (20, 21) de rigidification de la pièce de renforcement de structure (2),
**caractérisée en ce**
- **que** les fibres (4) dans la pièce de renforcement de structure (2) sont incorporées dans un état précontraint dans le plastique, ou en ce qu'un système de traction est prévu sous une forme précontrainte des fibres incorporées, dans laquelle
- les fibres (4) sont orientées de telle manière qu'en cas de contrainte de la pièce de véhicule (1) exercée par l'apparition d'une force, une déformation du profil de la pièce de véhicule (1), en particulier une tendance à l'ouverture et/ou un pliage de cette dernière, est contrecarrée.

2. Pièce de véhicule (1) selon la revendication 1, **caractérisée en ce**
**que** des fibres (4) métalliques sont prévues.

3. Pièce de véhicule (1) selon la revendication 1, **caractérisée en ce**
**que** des fibres (4) non métalliques sont prévues.

4. Pièce de véhicule (1) selon la revendication 1, **caractérisée en ce**
**que** des fibres (4) métalliques et non métalliques sont prévues.

5. Pièce de véhicule (1) selon l'une quelconque des revendications précédentes,
**caractérisée en ce**
**que** la pièce de renforcement de structure (2) est fixée de manière amovible au niveau de la pièce de véhicule (1).

6. Pièce de véhicule (1) selon l'une quelconque des revendications 1 à 3,
**caractérisée en ce**
**que** la pièce de renforcement de structure (2) est fixée de manière amovible au niveau de la pièce de véhicule (1).

7. Pièce de véhicule (1) selon la revendication 5 ou 6,
**caractérisée en ce**
**que** la pièce de renforcement de structure (2) et la pièce de véhicule (1) sont assemblées, en particulier peuvent être reliées ou sont reliées par une liaison par complémentarité de forme et/ou à force, par une liaison par adhérence, par collage, par rivetage, par clinchage.

8. Pièce de véhicule selon l'une quelconque des revendications précédentes,
**caractérisée en ce**
**que** la pièce de véhicule (1) est constituée d'un métal.

9. Pièce de véhicule (1) selon l'une quelconque des revendications précédentes,
**caractérisée en ce**
**que** la pièce de véhicule (1) constitue une pièce de véhicule exposée ou pouvant être exposée au cours d'une contrainte dynamique au cours du fonctionnement d'un véhicule pourvu de ladite pièce, est en particulier une colonne B, une colonne A, un système de protection anti-chocs latéral ou un arceau de sécurité d'un véhicule automobile.

10. Pièce de renforcement de structure (2) pour une partie de véhicule (1) servant à rigidifier cette dernière et destinée à être reliée à cette dernière, dans laquelle la partie de renforcement de structure (2) présente une face extérieure (23) et une face intérieure (24) et des fibres (4) dans la pièce de renforcement de structure (2) sont disposées de manière incorporée dans le plastique, dans laquelle la pièce de renforcement de structure (2) est pourvue d'au moins un élément de rigidification, en particulier d'au moins une nervure (20, 21), dans laquelle l'au moins un élément (20, 21) de rigidification est disposé sur la face extérieure (23) de la pièce de renforcement de structure (2), qui est reliée à la pièce de véhicule (1),
**caractérisée en ce**
- **que** les fibres (4) dans la pièce de renforcement de structure (2) sont incorporées dans un état précontraint dans le plastique, ou en ce qu'un système de traction est prévu dans une forme précontrainte des fibres incorporées, dans laquelle
- les fibres (4) présentent une orientation ciblée dans la pièce de renforcement de structure (2) afin de prévoir des rigidifications également seulement dans diverses directions.

11. Pièce de renforcement de structure (2) selon la revendication 10,
**caractérisée en ce**
**que** la pièce de renforcement de structure (2) présente au moins un système de réception (3) et/ou une bride destinée à être reliée à au moins un autre composant, en particulier un système de réception moulé et/ou une bride moulée.

12. Pièce de renforcement de structure (2) selon la revendication 10 ou 11,
**caractérisée en ce**
**que** la pièce de renforcement de structure (2) présente au moins une bride d'étanchéité et/ou une bride de collage (22) moulée et/ou des surfaces de collage dans la zone d'au moins un élément (20, 21) de rigidification ou au niveau de ce dernier.

13. Véhicule automobile, en particulier véhicule de tourisme ou camion, comprenant au moins une pièce de véhicule (1) selon l'une quelconque des revendications 1 à 9 et/ou une pièce de renforcement de structure (2) selon l'une quelconque des revendications 10 à 12.
